# EUROPEAN PATENT SPECIFICATION

(11) **EP 2 945 981 B1**
(45) Date of publication and mention of the grant of the patent: **06.05.2020**
(21) Application number: 14705376.3
(22) Date of filing: 20.01.2014
(51) Int. Cl.: C08J 9/00, C08J 9/16, C08L 25/04, C08J 9/20, C08F 12/08, C08F 2/44

(54) **METHOD OF PRODUCING POLYSTYRENE BEADS CONTAINING ATHERMANOUS PARTICLES**
VERFAHREN ZUR HERSTELLUNG VON POLYSTYROLKÜGELCHEN MIT WÄRMEUNDURCHLÄSSIGEN PARTIKELN
PROCÉDÉ DE PRODUCTION DE BILLES DE POLYSTYRÈNE CONTENANT DES PARTICULES ANTICALORIQUES

(30) Priority: 18.01.2013 FI 20135057
(43) Date of publication of application: 25.11.2015
(73) Proprietor: BEWiSynbra RAW Oy, 06101 Porvoo (FI)
(72) Inventor: NURMINEN, Ville, FI-06101 Porvoo (FI); LIPPONEN, Sami, FI-06101 Porvoo (FI); PESONEN, Elina, FI-06101 Porvoo (FI); RONKAINEN, Asko, FI-06101 Porvoo (FI)
(74) Representative: Laine IP Oy
(86) International application number: PCT/FI2014/050044
(87) International publication number: WO 2014/111629

(56) References cited:
- WO-A1-2006/061571
- US-A1- 2010 099 782
- US-A1- 2012 252 914
- US-B1- 6 387 968

## Description

### FIELD OF THE INVENTION

The present invention relates to polystyrene beads. In particular, the invention relates to the production of expandable polystyrene beads with fire-resistant properties and insulating properties. Thus, the invention relates to a method according to the preamble portion of claim 1 as well as expandable polystyrene beads according to the preamble of claim 19 and uses thereof.

### BACKGROUND ART

Polystyrene beads are traditionally produced by the suspension polymerisation of styrene, which involves the mechanical dispersion of styrene in water and polymerisation of the resultant monomer droplets by use of a monomer-soluble initiator. Styrene is kept in suspension by continuous agitation and the use of stabilisers. Polystyrene is obtained in the form of beads.

Expanded articles have been used for some time, for example to improve the thermal insulation of buildings. Generally, these articles are prepared by either extrusion or moulding through the swelling of polymer beads. Additives can be used to improve the desired properties of the articles. For example, hexabromocyclododecane is used in typically polystyrene building insulation, both extruded and expanded as a flame-retarding agent.

Expanded polystyrene (EPS) is becoming increasingly common for use in such articles. EPS is a rigid and tough, closed-cell foam, generally made of pre-expanded polystyrene beads. Common uses of these EPS beads include moulded sheets for building insulation and packing material for cushioning fragile items. The latest advances in the technology related to these EPS beads concern improving the thermal insulation of the articles prepared from the beads.

In order to improve the thermal insulating properties of polystyrene beads, athermanous particles, such as graphite and carbon black, are incorporated into the polystyrene to produce what is known as grey EPS. The production of grey EPS moulded articles is disclosed in EP 0 620 246. Athermanous material can be added directly to the polymerisation process, on the surface of the unexpanded EPS beads or to pre-foamed EPS beads before they are moulded. Further processes for the production of such materials are described in EP 0 981 574 and EP 0 981 575, as well as EP 1 608 698. WO2006061571, US6387968, US2010099782 and US2012252914 all disclose processes for the preparation of polystyrene beads.

Due to the addition of athermanous material, the colour of the granules is black and the colour of the corresponding expanded beads is grey. Grey EPS is more thermally efficient than white polystyrene and provides improved insulation achieving lower lambda values than that of white EPS. Grey EPS, however, has poor light reflecting capability and absorbs a considerable amount of light, thus heating up when exposed to sunlight.

### AIM OF THE INVENTION

It is an aim of the present invention to provide EPS, containing athermanous particles, having good thermally-insulating and improved light-reflecting properties employing a simple novel process.

Particularly, it is an aim of the present invention to provide expanded flame-retardant, thermally insulating boards that have light-reflecting properties.

### SUMMARY

The invention relates to methods of producing polystyrene beads, wherein styrene monomers, and optionally co-monomers are subjected to a polymerisation reaction in the presence of athermanous material and a polymerisation initiator to produce polystyrene beads. The method comprises adding at least a part of the monomers and the athermanous material in particulate form as a mixture together with a dilatanting agent as premix when the polymerisation has reached a conversion rate of 0.1 to 70%.

It has surprisingly been found that the thus produced beads exhibit a greater than expected ability to reflect light while maintaining the level of resistivity expected in grey EPS, *i.e.* high resistivity or low thermal conductivity.

By means of the invention, articles of expanded polystyrene are provided which exhibit a high reflectivity combined with good heat-insulation properties.

More specifically, the method according to the present invention is characterised by what is stated in claim 1. The EPS beads are characterised by what is stated in the characterising part of claim 11. Articles comprising expanded PS are characterized by what is stated in claims 12-15.

### BENEFITS

Considerable benefits are gained with the aid of the present invention. The present invention provides expandable polymer beads that can be used to prepare foamed articles of low thermal conductivity yet of light colour.

Other features and advantages will become apparent from the following description.

### BRIEF DESCRIPTION OF DRAWINGS

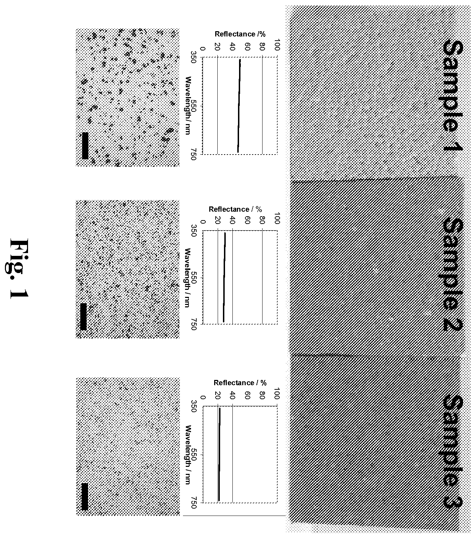

Figure 1 comprises photographs of the samples (cross-sections of panels) produced in Example 1 and Comparative Examples 2 and 3 (upper portion); reflectivity measurements corresponding to the samples (intermediate portion) as well as micrographs of the samples.

### DETAILED DESCRIPTION OF PREFERRED EMBODIMENTS

Various embodiments described herein provide a method of producing EPS beads, including a method and process for the incorporation of a dilatanting agent as well as athermanous particles into the beads.

The present technology comprises a method of producing expandable polystyrene beads containing athermanous particles and a dilatanting agent and having a reflective surface.

As mentioned above, the method according to the present technology is based on polymerisation of styrene monomers. A first portion of the styrene monomers to be polymerised is subjected to polymerisation in the presence of a polymerisation initiator and a premix of a second portion of the monomers to be polymerised, carbon black and a dilatanting agent. The addition of the premix to the polymerisation process results in the production of a light in colour grey EPS. The light in colour grey EPS produced has a similar thermal conductivity to grey EPS and a considerably lower conductivity than the corresponding white EPS.

The premix is added when the polymerisation reaction has reached a preselected conversion rate and the polymerisation is continued in order to produce EPS beads.

In a preferred embodiment the dilatanting agent acts as a flocculent causing the athermanous particles of the premix to agglomerate. This agglomeration allows the athermanous particle size in the EPS to be selected and therefore maintained. This size selection is what allows the produced EPS to be lighter in colour and, thus, more reflective than grey EPS produced by other methods. The number of separate athermanous particles in each EPS bead is reduced while the mass of athermanous particles in each bead is maintained. The premix is added to the polymerisation at any time and is in one embodiment added at a conversion rate of 0.1 to 70.0 %, in particular about 1 to 50.0 %, especially about 10.0 to 30.0 %, calculated from the total mass of the styrene monomer.

In a further embodiment the dilatanting agent is a polymeric fire-retarding agent. In a preferred embodiment the dilatanting agent is added in an amount of 0.01 to 5.0 %, in particular 0.05 to 4.0 %, preferably about 0.1 to 3.0%, advantageously 0.2 to 2.0 % by total mass, of the styrene monomer.

KR20090038314 discloses a method of forming an outer layer of polystyrene containing flame retardant and an inorganic filler on the surface of a foamed polystyrene bead. Styrene monomers, and optionally comonomers, are subjected to a polymerisation reaction in the presence of athermanous material and a polymerisation initiator in a continuous stirred tank reactor (CSTR) in which polystyrene beads are present.

US2012252914 discloses flame-retardant polymer expandable styrene polymers comprising at least one halogenated polymer as a flame retardant and processes for producing the same. The process of the above-mentioned publication comprises heating a mixture of demineralized water, sodium pyrophosphate, styrene, tert-butyl 2-ethylperoxyhexanoate, tert-butyl perbenzoate, graphite powder, and also flame retardant to 90° C in a pressure-resistant stirred tank, with stirring.

In neither of the publications is there any teaching on the use of the flame-retarding polymer as a dilatanting agent as a flocculent for causing the athermanous particles of the premix to agglomerate.

In one embodiment polymerisation is carried out in a static mixer.

In a further embodiment the polymerisation is carried out in a liquid phase into which the styrene monomers are suspended. In a preferred embodiment the liquid phase is an aqueous phase.

Thus, in one embodiment of the indicated kind, flame-retardant polystyrene beads are produced by suspension polymerisation. Thus, a portion of the styrene monomers to be polymerised are mixed with athermanous material and a dilatanting agent into a premix. The remaining portion of the monomers to be polymerised is suspended in a liquid phase to form a suspension and is subjected to a polymerisation reaction in the presence of a polymerisation initiator to produce expandable polystyrene (EPS) beads. The premix is added to the suspension at a preselected point of time, and polymerisation is continued in order to produce EPS beads. On addition of the dilatanting agent to the premix, the premix itself becomes a dilatant or shear-thickening premix that becomes more viscous with increasing shear rate, *i.e.* the viscosity of the dilatant premix is dependent on shear rate. The foamed polystyrene articles made from the above described beads have excellent properties; in particular they exhibit fire-resistant properties, a light, aesthetically-pleasing colour, as well as a more reflective surface than is typical in grey EPS and still they maintain excellent thermal insulation properties.

Dilatanting agent is used synonymously with "shear-thickening" and denotes any agent capable of achieving an anti-thixotropic effect, *i.e*. viscosity increases when agitation, exemplified by any of the following: stirring; mixing; beating; whipping or any other form of shear stress; or shaking is applied.

The dilatanting agent can be added in various forms and in one embodiment the dilatanting agent is added as a dry powder, or optionally as pellets, preferably dissolved, more preferably dispersed in a liquid, for example in a solvent corresponding to the liquid phase of the suspension, more particularly preferably dissolved in the portion of the styrene monomers of the premix.

In a preferred embodiment the dilatanting agent is a flame retarding agent, selected from the group of polymeric compounds which exhibit a shear-thickening effect. Examples of suitable flame retarding agents include halogenated, in particular chlorinated or preferably brominated polymers and polymeric compounds. Specific embodiments of the flame retarding agents are represented by halogenated, in particular brominated polystyrene, halogenated, in particular brominated block copolymers, containing styrene and/or butadiene and/or tetrabromobisphenol A units or blocks of such units, e.g. styrene-butadiene block copolymers. Typically, the halogen content of such polymers is up to 90 % by weight of the halogenated polymer. In preferred embodiments, the bromine concentration is about 10 to 85 % by weight, in particular about 30 to 80 % by weight, of the brominated polymer (e.g. polystyrene or styrene-butadiene block copolymer).

The production of halogenated polymeric flame retardants is disclosed in WO 2007/058736.

Naturally, as has been discussed above, it is required that the flame retarding agent selected has a dilatanting effect and that it is added in such a way that it is capable of exerting such an effect.

In addition to halogenated polymeric flame retardants, it is also possible to use conventional flame retardants, such as organochlorines and organobromines.

In one embodiment a method is provided for producing expandable polystyrene beads in which styrene monomers are polymerised in a suspension at a first temperature in the range of about 75 to 110 °C until a preselected degree of conversion has been reached. The premix is added to the suspension. In the said embodiment a blowing agent is added and the suspension is heated to a second, higher temperature during the addition of the blowing agent.

Polymerisation is continued until a preselected final conversion degree has been reached. In a further embodiment the temperature of the suspension is raised to a third temperature higher than the second temperature. In a further embodiment the premix is added over a time period smaller than that needed for increasing the conversion rate of the polymerisation by 10 % units, preferably over a time period corresponding to the time needed for increasing the conversion rate by 10 to 30 % units.

In one example the polymerisation is continued to a conversion rate of at least 95 %, calculated from the styrene monomer and in a preferred embodiment the EPS beads are recovered from the liquid phase.

A blowing agents is added during the implementation of the process or afterwards. The blowing agent typically comprises a hydrocarbon, such as an aliphatic hydrocarbon having 3 to 10 carbon atoms. Typical examples of such hydrocarbons comprise C3 to C6 aliphatics and isomers thereof. Specific examples are propane, butane, pentane and hexane and isomers thereof, such as isobutane, isopentane and isohexane. The blowing agent is added in amounts of about 0.1 to about 15 parts by weight per 100 parts by weight of styrene.

In another example the polymerisation is carried out in the presence of a radical initiator or initiators, typically 1 to 4 initiators being used.

In one embodiment polymerisation is carried out in the presence of additives selected from the group of emulsifiers, preferably stabilizers, more preferably fillers *e.g.* talc, as well as combinations thereof, each additive providing its own additional property to the produced EPS beads. *e.g.* making the beads more stable.

In one embodiment the styrene monomers are polymerised in the presence of comonomers. The addition of comonomers varies the quality of the resultant polystyrene beads. In a further embodiment the athermanous particles are selected from the group of carbon black particles, graphite, graphene and other carbon-based materials. The content of athermanous particles is typically 0.1 to 15 parts by weight, for example 1 to 10, or 2 to 5, parts by weight, based on 100 parts by weight of styrene.

In a further embodiment expanded polystyrene beads or articles that are produced exhibit a reflectance that is 30 to 70 %, preferably 40 to 60 %, more preferably 45 to 55 %, which is two to three times the reflectance of expanded polystyrene beads produced in the absence of said premix.

In a further embodiment, expanded polystyrene beads are provided. In one embodiment articles are produced from the expanded polystyrene beads. In a preferred embodiment the articles comprise insulating board composed of expanded polystyrene beads said insulating board having a reflective surface and a thermal conductivity value corresponding to its thermal insulating properties.

The production of expanded product from polystyrene beads is well-known in the art.

Thus, in one alternative, for producing expanded products, the expandable beads are heated, for example by using a heat transfer medium such as steam, to a temperature high enough to soften the beads, preferably to a temperature above the glass transition point of polystyrene. Typically, the temperature is in excess of 95 °C, in particular 100 °C or higher. The heating will cause the blowing agent to boil and while the blowing agent is evaporated off the beads, swelling of the beads is achieved and porous particles created, which can be moulded together to form articles, such as panels, sheets and boards, by using traditional shape or block moulding methods.

In one embodiment the insulating board composed of expanded polystyrene beads comprises 0.01 to 5.0 %, preferably 0.05 to 4.0 % more preferably 0.1 to 3.0 %, advantageously 0.2 to 2.0 % by total mass of the styrene of dilatanting agent, and 0.1 to 15.0 %, preferably 1.0 to 10.0 %, advantageously 3.0 to 6.0 % by total mass of the styrene of agglomerated carbon black particles.

The agglomeration of the carbon black particles of the composition provides thermal insulating properties and provides the composition with a lighter colour and, thus, higher reflectivity than compositions in which added carbon black particles are not agglomerated.

Generally, the thermal conductivity of an insulating board according to the present invention, composed of expanded polystyrene beads is, measured at a density of about15 kg/m³, roughly 15 ± 2 kg/m³, 0.025 to 0.045 W/(m K), preferably 0.027 to 0.035 W/(m K).

Based on the above, article produced from expanded polystyrene beads as described herein exhibit a reflectivity at 700 nm of at least 20 % higher than a corresponding article produced from expanded polystyrene beads in the absence of a dilatant agent.

In one embodiment, articles produced from the present expanded polystyrene beads exhibit a reflectivity at 700 nm of at least 25 %, for example 30 to 70 %, preferably 40 to 60%, more preferably 45 to 55%, at a content of athermanous particles of up to typically 6 %, or up to 5 %, in particular about 1 to 4.5 %, for example 1 to 3.5 %, by weight of the polystyrene, measured at a density of 10 to 30 kg/m³.

The λ value of the insulating board composed of expanded polystyrene beads is, measured using standard methods (EN12667 or ISO 8301) at a density of about 15 kg/m³, 0.015 to 0.05 W/m K, preferably 0.02 to 0.04 W/m K, advantageously 0.025 to 0.035 W/m K (e.g. 0.027 to 0.034 W/m K).

Thus, one particularly preferred embodiment comprises an insulating panel, board or sheet of expanded polystyrene, containing athermanous particles, which exhibits in combination a reflectivity of better than 30 % and a λ value of 0.025 to 0.035 W/m K (e.g. 0.027 to 0.034 W/m K), measured at about 15 kg/m³.

In the present context, the expression "about 15 kg/m³ is used include a 10 to 20 % variation of the exact value, thus about 15 kg/m³ can be interpreted as being typically 15 ± 2 kg/m³.

The following non-limiting examples are intended to merely illustrate the methods according to the preferred embodiments of the invention.

Heat insulation has been determined by ISO Standard 8301 using a Heat Flow Meter device, with a mean temperature of 10 °C and a temperature difference of 20 °C. The samples were kept in an oven at 70 °C for 7 days before measuring of λ value.

The reflectance of visible light (from 360 to 740 nm) of this plate was determined with Konica Minolta Spectrophotometer cm-2600d.

Flame retarding properties were tested according to DIN 4102 B2.

### EXAMPLES

### Example 1

### Preparation of styrene/carbon black premix

28.5 g of polymeric flame retardant Emerald 3000 (dilatanting agent) was dissolved in 250 g of styrene, whereafter 57 g of carbon black Lamp Black 101 was mixed in it.

### Polymerisation

2.3 1 of ion-exchanged water, 3.8 g of sodium acetate, and 3.8 g of sodium bentonite were added to a stirred 6 1 autoclave. The mixture was heated to 90 °C within 1h, while 1.65 kg styrene, 1.9 g polyethylene, 7.6 g tert-butyl peroxy-2-ethylhexanoate, 5.7 g tert-butylperoxy 2-ethylhexyl carbonate, 5.7 g dicumylperoxide, and 3.8 g pig skin gelatine were added to the autoclave. After the mixture was kept at 90°C for 30 min, the styrene/carbon black premix was added. After the mixture was kept at 90°C for 315 min, 3.8 g of pig skin gelatine was added.

Altogether the mixture was kept at 90°C for 320 min whereafter it was heated to 120°C within 2h. While heating to 120°C, 152 g of pentane was added. The mixture was kept at 120°C for 2h whereafter it was cooled to 37°C within 90 min. The reaction mixture was removed from the autoclave and the polystyrene beads were washed thoroughly with water. The beads were sieved and the sizes from 0.8 mm to 1.4 mm were pre-expanded to 15 kg/m³ from which a 50 mm thick sample plate was moulded. The reflectance of visible light (from 360 to 740 nm) of this plate was determined with Konica Minolta Spectrophotometer cm-2600d. In addition, the thermal conductivity of this plate was determined.

*Results* (density 15.6 kg/m³): Thermal conductivity 33.4 mW/(m K), 48,0 % reflectance at 700 nm.

Fire test according to DIN 4102 B2 was passed.

### Comparative Example 2

### Preparation of styrene/carbon black premix

Styrene/carbon black (Lamp Black 101) premix was prepared by mixing 57 g of carbon black in 250 g of styrene.

### Polymerisation

2.3 1 of ion-exchanged water, 3.8 g of sodium acetate, and 3.8 g of sodium bentonite were added to a stirred 61 autoclave. The mixture was heated to 90 °C within 1h, while 1.65 kg styrene, 1.9 g polyethylene, 7.6 g tert-butyl peroxy-2-ethylhexanoate, 5.7 g tert-butylperoxy 2-ethylhexyl carbonate, 5.7 g dicumylperoxide, 28.5 g of flame retardant Emerald 3000 (dilatanting agent) and 3.8 g pig skin gelatine were added to the autoclave. After the mixture was kept at 90°C for 30 min, the styrene/carbon black premix was added. After the mixture was kept at 90°C for 315 min, 3.8 g of pig skin gelatine was added. Altogether the mixture was kept at 90°C for 320 min whereafter it was heated to 120°C within 2h. While heating to 120°C, 152 g of pentane was added. The mixture was kept at 120°C for 2h whereafter it was cooled to 37°C within 90 min. The reaction mixture was removed from the autoclave and the polystyrene beads were washed thoroughly with water. The beads were sieved and the sizes from 0.8 mm to 1.4 mm were pre-expanded to 15 kg/m³ from which a 50 mm thick sample plate was moulded. The reflectance of visible light (from 360 to 740 nm) of this plate was determined with Konica Minolta Spectrophotometer cm-2600d. In addition, the thermal conductivity of this plate was determined.

*Results* (density 19.6 kg/m³): Thermal conductivity 32.4 mW/(m K), 28.2 % reflectance at 700 nm.

### Comparative Example 3

Example 2 was repeated without polymeric flame retardant agent Emerald 3000.

*Results* (density 14.4 kg/m³): Thermal conductivity 33.9 mW/mK, 22.0 % reflectance at 700 nm.

### INDUSTRIAL APPLICABILITY

The present technology can be employed to provide thermally-insulating, light-reflecting expanded polystyrene articles for application in *e.g.* the construction industry.

### CITATION LIST

### Patent Literature

ALGOSTAT GmbH & CO. KG - EP0620246 - Polystyrene Hard Foam Moulded Articles
Glück Guiscard et al. - EP0981574 - Expandable Polystyrene Polymers Containing Graphite Particles
Glück Guiscard et al. - EP0981575 - Method For Producing Expandable Polystyrene Polymers Containing Graphite Particles
Ponticiello Antonio et al. - EP1608698 - Expandable Vinyl Aromatic Polymers and Process For Their Preparation
Dongbu Hitek Co Ltd. - KR20090038314 - Expandable Polystyrene Bead and Method for Providing the Same
Hahn et al. - US2012252914 - Flame Protected Polymer Foams
King et al. - WO 2007/058736 - Brominated Butadiene/Vinyl Aromatic Copolymers, Blends of Such Copolymers with a Vinyl Aromatic Polymer, and Polymeric Foams Formed From Such Blends

## Claims

1. Method of producing polystyrene beads, wherein styrene monomers, and optionally comonomers are subjected to a polymerisation reaction in the presence of athermanous material and a polymerisation initiator to produce polystyrene beads, said method comprising
- adding a premix of at least a part of the monomers and the athermanous material in particulate form as a mixture together with a dilatanting agent, adding said premix when the polymerisation has reached a conversion rate of 0.1 to 70.0 %.

2. The method according to claim 1, wherein the dilatanting agent flocculates the athermanous material particles of the premix causing them to agglomerate.

3. The method according to any of the preceding claims, wherein the dilatanting agent is a polymeric flame-retarding agent, in particular a brominated polymeric flame-retarding agent, said dilatanting agent preferably being added in an amount of 0.01 to 5.0 %, in particular 0.05 to 4.0 %, preferably about 0.1 to 3.0 %, advantageously 0.2 to 2.0 % by total mass of the styrene monomer.

4. The method according to any of the preceding claims, wherein the polymerisation is carried out in a liquid phase into which the styrene monomers are suspended, optionally an aqueous phase.

5. The method according to any of the preceding claims, wherein the dilatanting agent is added as a dry powder, or optionally as pellets, preferably dissolved, more preferably dispersed in a liquid, for example in a solvent corresponding to the liquid phase of the suspension, more particularly preferably dissolved in the portion of styrene monomers of the premix.

6. The method according to any of the preceding claims for producing expandable polystyrene beads, comprising
- polymerising styrene monomer in a suspension at a first temperature in the range of about 75 to about 110 °C until a preselected degree of conversion of at least 50 %, calculated from the molar amount of the styrene monomer, has been reached,
- adding a blowing agent,
- heating the suspension to a second temperature higher than the first temperature during the addition of the blowing agent,
- optionally raising the temperature of the suspension to a third temperature higher than the second temperature, and
- continuing polymerisation until a preselected final conversion degree has been reached,
said premix being added to the suspension before addition of the blowing agent.

7. The method according to any of the preceding claims, wherein the premix is added over a time period which is smaller than needed for increasing the conversion rate of the polymerisation with 10 % units, or wherein the premix is added over a time interval corresponding to the time needed for increasing the conversion rate with 10 to 30 % units.

8. The method according to any of the preceding claims, wherein the polymerisation is continued up to a conversion rate of at least 95 %, calculated from the styrene monomer, said polymerisation is optionally carried out in the presence of a radical initiator or combinations of radical initiators, and optionally in the presence of additives selected from the group of emulsifiers, stabilizers, fillers, such as talc, as well as combinations thereof.

9. The method according to any of the preceding claims, wherein the styrene monomers are polymerised in the presence of comonomers.

10. The method according to any of the preceding claims, wherein the athermanous material particles are selected from the group of carbon black particles, graphite, graphene and other carbon-based materials, wherein such particles are in an amount of 0.1 to 15 % parts by weight per 100 parts by weight of styrene monomers.

11. Expandable polystyrene beads obtained by a method according to any of the preceding claims.

12. Article produced from expanded polystyrene beads according to claim 11, exhibiting a reflectivity at 700 nm of at least 20 % higher than the corresponding article produced from expanded polystyrene beads in the absence of a dilatanting agent as measured as disclosed in the description.

13. Article produced from expanded polystyrene beads according to claim 11, exhibiting a reflectivity at 700 nm of 30 to 70 % as measured according the disclosure of the description, preferably 40 to 60 % as measured according the disclosure of the description, more preferably 45 to 55 % as measured according the disclosure of the description, at a content of athermanous particles of up to 6 % by weight of the polystyrene, measured at a density of 10 to 30 kg/m³.

14. The articles according to any of claims 12 or 13 wherein the insulating board composed of expanded polystyrene beads comprises 0.01 to 3.0 %, preferably 0.05 to 2.5 % more preferably 0.1 to 2.0 %, advantageously 0.5 to 1.5 % by total mass of the styrene of dilatanting agent, and 1.0 to 6.0 %, preferably 2.0 to 5.0 %, advantageously 2.5 to 4.0 % by total mass of the styrene of agglomerated athermanous particles, and optionally has a λ value measured according to EN12667 or ISO8301 at a density of 15 kg/m³, 0.015 to 0.05 W/m K, preferably 0.02 to 0.04 W/m K, advantageously 0.025 to 0.035 W/m K.

15. An article of expanded polystyrene, containing athermanous particles, which exhibits in combination a reflectivity of better than 30 % and a λ value of 0.025 to 0.035 W/m K, measured at a density of about 15 kg/m³.

## Patentansprüche

1. Verfahren zum Herstellen von Polystyrolkügelchen, wobei Styrolmonomere und optional Comonomere einer Polymerisationsreaktion in Gegenwart von wärmeundurchlässigem Material und einem Polymerisationsinitiator zur Herstellung von Polystyrolkügelchen unterzogen werden, wobei das Verfahren Folgendes umfasst
- Hinzufügen einer Vormischung von mindestens einem Teil der Monomere und dem wärmeundurchlässigen Material in partikulärer Form als Mischung zusammen mit einem Dilatationsmittel, Hinzufügen der Vormischung wenn die Polymerisation eine Konversionsrate von 0,1 bis 70,0 % erreicht hat.

2. Verfahren nach Anspruch 1, wobei das Dilatationsmittel die Partikel des wärmeundurchlässigen Materials der Vormischung ausflockt, indem es sie dazu bringt zu agglomerieren.

3. Verfahren nach einem der voranstehenden Ansprüche, wobei das Dilatationsmittel ein polymeres Flammschutzmittel ist, insbesondere ein bromiertes polymeres Flammschutzmittel, wobei das Dilatationsmittel vorzugsweise in einer Menge von 0,01 bis 5,0 %, insbesondere 0,05 bis 4,0 %, vorzugsweise etwa 0,1 bis 3,0 %, vorteilhafterweise 0,2 bis 2,0 % der Gesamtmasse des Styrolmonomers zugesetzt wird.

4. Verfahren nach einem der voranstehenden Ansprüche, wobei die Polymerisation in einer flüssigen Phase durchgeführt wird, in der die Styrolmonomere suspendiert sind, optional einer wässrigen Phase.

5. Verfahren nach einem der voranstehenden Ansprüche, wobei das Dilatationsmittel als ein trockenes Pulver oder optional als Pellets zugesetzt wird, bevorzugt gelöst, bevorzugter dispergiert in einer Flüssigkeit, beispielsweise in einem Lösungsmittel entsprechend der flüssigen Phase der Suspension, insbesondere bevorzugt gelöst in dem Anteil an Styrolmonomeren der Vormischung.

6. Verfahren nach einem der voranstehenden Ansprüche zum Herstellen expandierbarer Polystyrolkügelchen, umfassend
- Polymerisieren von Styrolmonomer in einer Suspension bei einer ersten Temperatur in dem Bereich von etwa 75 bis etwa 110 °C bis ein vorgewählter Konversionsgrad von mindestens 50 %, berechnet aus der molaren Menge des Styrolmonomers, erreicht wurde,
- Hinzufügen eines Treibmittels,
- Erhitzen der Suspension auf eine zweite Temperatur, die höher ist als die erste Temperatur, während der Zugabe des Treibmittels,
- optional Erhöhen der Temperatur der Suspension auf eine dritte Temperatur, die höher als die zweite Temperatur ist, und
- Fortsetzung der Polymerisation, bis ein vorgewählter endgültiger Konversionsgrad erreicht wurde,
wobei die Vormischung vor der Zugabe des Treibmittels zu der Suspension hinzugefügt wird.

7. Verfahren nach einem der voranstehenden Ansprüche, wobei die Vormischung über einen Zeitraum zugegeben wird, der kleiner ist als zur Erhöhung der Konversionsrate der Polymerisation um 10 % Einheiten erforderlich, oder wobei die Vormischung über ein Zeitintervall hinzugefügt wird, das der Zeit entspricht, die zum Erhöhen der Konversionsrate um 10 bis 30 % Einheiten benötigt wird.

8. Verfahren nach einem der voranstehenden Ansprüche, wobei die Polymerisation bis zu einer Konversionsrate von mindestens 95 % fortgesetzt wird, berechnet ausgehend von dem Styrolmonomer, wobei die Polymerisation optional in Gegenwart eines Radikalinitiators oder Kombinationen von Radikalinitiatoren durchgeführt wird, und optional in Gegenwart von Additiven, die aus der Gruppe von Emulgatoren, Stabilisatoren, Füllstoffen wie Talk sowie Kombinationen dieser ausgewählt sind.

9. Verfahren nach einem der voranstehenden Ansprüche, wobei die Styrolmonomere in der Gegenwart von Comonomeren polymerisiert werden.

10. Verfahren nach einem der voranstehenden Ansprüche, wobei die wärmeundurchlässigen Materialpartikel ausgewählt sind aus der Gruppe von Rußpartikeln, Graphit, Graphen und anderen Materialien auf Kohlenstoffbasis, wobei solche Partikel in einer Menge von 0,1 bis 15 Gew.-% pro 100 Gewichtsteile Styrolmonomere vorliegen.

11. Expandierbare Polystyrolkügelchen, erhalten durch ein Verfahren gemäß einem der voranstehenden Ansprüche.

12. Artikel, hergestellt aus expandierten Polystyrolkügelchen nach Anspruch 11, der eine Reflektivität bei 700 nm aufweist, die mindestens 20 % höher ist als der entsprechende Artikel, der aus expandierten Polystyrolkügelchen in Abwesenheit eines Dilatationsmittels hergestellt wurde, gemessen wie in der Beschreibung offenbart.

13. Artikel, hergestellt aus expandierten Polystyrolkügelchen nach Anspruch 11, der eine Reflektivität von 30 bis 70 % bei 700 nm aufweist, gemessen gemäß der Offenbarung der Beschreibung, vorzugsweise 40 bis 60 %, gemessen gemäß der Offenbarung der Beschreibung, bevorzugter 45 bis 55 %, gemessen gemäß der Offenbarung der Beschreibung, bei einem Gehalt an wärmeundurchlässigen Partikeln von bis zu 6 Gew.-% des Polystyrols, gemessen bei einer Dichte von 10 bis 30 kg/m³.

14. Artikel nach einem der Ansprüche 12 oder 13, wobei die aus expandierten Polystyrolkügelchen bestehende Isolierplatte 0,01 bis 3,0 %, vorzugsweise 0,05 bis 2,5 %, bevorzugter 0,1 bis 2,0 %, vorteilhafterweise 0,5 bis 1,5 % der Gesamtmasse des Styrols an Dilatationsmittel umfasst, und 1,0 bis 6,0 %, vorzugsweise 2,0 bis 5,0 %, vorteilhafterweise 2,5 bis 4,0 % der Gesamtmasse des Styrols an agglomerierten wärmeundurchlässigen Partikeln, und optional einen λ-Wert, gemessen gemäß EN12667 oder ISO8301 bei einer Dichte von 15 kg/m³, von 0,015 bis 0,05 W/m K aufweist, vorzugsweise 0,02 bis 0,04 W/m K, vorteilhafterweise 0,025 bis 0,035 W/m K.

15. Artikel aus expandiertem Polystyrol, der wärmeundurchlässige Partikel enthält und in Kombination eine Reflektivität von besser als 30 % und einen λ-Wert von 0,025 bis 0,035 W/m K aufweist, gemessen bei einer Dichte von etwa 15 kg/m³.

## Revendications

1. Procédé de production de billes de polystyrène, dans lequel des monomères de styrène, et éventuellement des co-monomères sont soumis à une réaction de polymérisation en présence de matière athermane et d'un initiateur de polymérisation pour produire des billes de polystyrène, ledit procédé comprenant
- l'ajout d'un pré-mélange d'au moins une partie des monomères et de la matière athermane sous forme particulaire en tant que mélange conjointement à un agent dilatant, ledit pré-mélange étant ajouté lorsque la polymérisation a atteint un taux de conversion de 0,1 à 70,0 %.

2. Procédé selon la revendication 1, dans lequel l'agent dilatant flocule les particules de matière athermane du pré-mélange, provoquant leur agglomération.

3. Procédé selon l'une quelconque des revendications précédentes, dans lequel l'agent dilatant est un agent ignifuge polymère, en particulier un agent ignifuge polymère bromé, ledit agent dilatant étant de préférence ajouté dans une quantité de 0,01 à 5,0 %, en particulier 0,05 à 4,0 %, de préférence environ 0,1 à 3,0 %, de manière avantageuse 0,2 à 2,0 % en masse totale du monomère de styrène.

4. Procédé selon l'une quelconque des revendications précédentes, dans lequel la polymérisation est réalisée dans une phase liquide dans laquelle les monomères de styrène sont mis en suspension, éventuellement une phase aqueuse.

5. Procédé selon l'une quelconque des revendications précédentes, dans lequel l'agent dilatant est ajouté sous la forme d'une poudre sèche, ou éventuellement sous la forme de pastilles, de préférence dissoutes, de manière davantage préférée dispersées dans un liquide, par exemple dans un solvant correspondant à la phase liquide de la suspension, de manière plus particulièrement préférable dissoutes dans la portion de monomères de styrène du pré-mélange.

6. Procédé selon l'une quelconque des revendications précédentes pour produire des billes de polystyrène expansibles, comprenant
- la polymérisation de monomère de styrène dans une suspension à une première température dans la plage d'environ 75 à environ 110 °C jusqu'à ce qu'un degré de conversion présélectionné d'au moins 50 %, calculé à partir de la quantité molaire du monomère de styrène, ait été atteint,
- l'ajout d'un agent de gonflement,
- le chauffage de la suspension à une deuxième température supérieure à la première température pendant l'ajout de l'agent de gonflement,
- éventuellement l'élévation de la température de la suspension jusqu'à une troisième température supérieure à la deuxième température, et
- la poursuite de la polymérisation jusqu'à ce qu'un degré de conversion final présélectionné ait été atteint,
ledit pré-mélange étant ajouté à la suspension avant l'ajout de l'agent de gonflement.

7. Procédé selon l'une quelconque des revendications précédentes, dans lequel le pré-mélange est ajouté sur une durée qui est plus courte que nécessaire pour augmenter le taux de conversion de la polymérisation par unités de 10 %, ou dans lequel le pré-mélange est ajouté sur un intervalle de temps correspondant à la durée nécessaire pour augmenter le taux de conversion par unités de 10 à 30 %.

8. Procédé selon l'une quelconque des revendications précédentes, dans lequel la polymérisation est poursuivie jusqu'à un taux de conversion d'au moins 95 %, calculé à partir du monomère de styrène, ladite polymérisation étant éventuellement réalisée en présence d'un initiateur radicalaire ou de combinaisons d'initiateurs radicalaires, et éventuellement en présence d'additifs sélectionnés dans le groupe des émulsifiants, stabilisants, charges, telle que le talc, ainsi que leurs combinaisons.

9. Procédé selon l'une quelconque des revendications précédentes, dans lequel les monomères de styrène sont polymérisés en présence de co-monomères.

10. Procédé selon l'une quelconque des revendications précédentes, dans lequel les particules de matière athermane sont sélectionnées dans le groupe des particules de noir de charbon, du graphite, du graphène et d'autres matières à base de carbone, dans lequel de telles particules sont présentes dans une quantité de 0,1 à 15 % de parties en poids pour 100 parties en poids de monomères de styrène.

11. Billes de polystyrène expansible obtenues par un procédé selon l'une quelconque des revendications précédentes.

12. Article produit à partir de billes de polystyrène expansé selon la revendication 11, présentant une réflectivité à 700 nm supérieure d'au moins 20 % à l'article correspondant produit à partir de billes de polystyrène expansé en l'absence d'un agent dilatant, telle que mesurée comme divulgué dans la description.

13. Article produit à partir de billes de polystyrène expansé selon la revendication 11, présentant une réflectivité à 700 nm de 30 à 70 %, telle que mesurée selon la divulgation de la description, de préférence de 40 à 60 % telle que mesurée selon la divulgation de la description, de manière davantage préférée de 45 à 55 % telle que mesurée selon la divulgation de la description, à une teneur de particules athermanes allant jusqu'à 6 % en poids du polystyrène, mesurée à une masse volumique de 10 à 30 kg/m³.

14. Articles selon l'une quelconque des revendications 12 ou 13, dans lesquels le panneau isolant composé de billes de polystyrène expansé comprend 0,01 à 3,0 %, de préférence 0,05 à 2,5 %, de manière davantage préférée 0,1 à 2,0 %, de manière avantageuse 0,5 à 1,5 % en masse totale du styrène d'agent dilatant, et 1,0 à 6,0 %, de préférence 2,0 à 5,0 %, de manière avantageuse 2,5 à 4,0 % en masse totale du styrène de particules athermanes agglomérées, et a éventuellement une valeur λ mesurée selon la norme EN12667 ou ISO8301 à une masse volumique de 15 kg/m³, de 0,015 à 0,05 W/m K, de préférence 0,02 à 0,04 W/m K, de manière avantageuse 0,025 à 0,035 W/m K.

15. Article de polystyrène expansé, contenant des particules athermanes, qui présente en combinaison une réflectivité meilleure que 30 % et une valeur λ de 0,025 à 0,035 W/m K, mesurée à une masse volumique d'environ 15 kg/m³.
